(19) Europäisches Patentamt
European Patent Office
Office européen des brevets

(11) **EP 3 910 226 B1**

(12) **EUROPEAN PATENT SPECIFICATION**

(45) Date of publication and mention
of the grant of the patent:
**30.11.2022 Bulletin 2022/48**

(21) Application number: **21159836.2**

(22) Date of filing: **01.03.2021**

(51) International Patent Classification (IPC):
***F16L 41/02*** *(2006.01)*

(52) Cooperative Patent Classification (CPC):
**F16L 41/023**

(54) **ECONOMICAL FITTING CONNECTING TWO PRESSURE PIPELINES INTO ONE OUTLET PIPELINE**

ENERGIESPARENDES FORMSTÜCK ZUM ANSCHLUSS VON ZWEI DRUCKLEITUNGEN AN EINE AUSLASSLEITUNG

RACCORD ECONOMIQUE POUR RACCORDER DEUX TUYAUX SOUS PRESSION A UN TUYAU DE SORTIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2020 CZ 20200275**

(43) Date of publication of application:
**17.11.2021 Bulletin 2021/46**

(73) Proprietor: **Ceske vysoke uceni technicke v Praze**
**160 00 Praha 6 - Dejvice (CZ)**

(72) Inventors:
• **STASTNY, Bohumil**
**18600 Praha 8, Karlin (CZ)**

• **HORKY, Filip**
**15000 Praha 5, Kosire (CZ)**

(74) Representative: **Kratochvil, Vaclav**
**Patent and Trademark Office**
**P.O. Box 26**
**295 01 Mnichovo Hradiste (CZ)**

(56) References cited:
CN-A- 110 715 134   DE-A1- 1 425 473
JP-A- H11 287 378   US-A1- 2011 139 277
US-A1- 2018 313 487

## Description

Technical Field

The invention relates to a pipe fitting for connection of two pressure pipelines into one downstream pipeline; especially when connecting parallel pumps in water management operations. This connection of two pipelines into one downstream pipeline is desirable to apply in particular with delivery ducts of parallelly connected pumps.

Background Art

For a long-term safe and economical operation of line water management facilities, economical water transport must be ensured. For this purpose, pressure pipeline systems made of ductile iron, PE, PVC, PP or steel are mostly used.

Hydraulic energy losses appear when liquids flow in the pressure pipeline. In general, the energy of the flowing liquid for two flow Profiles A and B may be expressed using the following (Bernoulli) equation.

$$\frac{v_A^2}{2g} + \frac{p_A}{\rho g} + H_A = \frac{v_B^2}{2g} + \frac{p_B}{\rho g} + H_B + \Sigma Z$$

Where the first equation term $v^2/2g$ represents the kinetic energy in the given profile, the second term $p/pg$ represents the pressure energy in the given profile, and the third term H represents the potential energy in the given profile. Due to flowing of the liquid from Profile A to Profile B, hydraulic losses caused by friction are always present. The losses are caused partly by friction of the flowing liquid against the inner pipe walls and partly by inter-friction of individual particles in the flowing liquid. In case the velocity field of the flowing liquid changes, local energy losses appear. The change of the velocity field of the flowing liquid may be caused, for example, by the change of the pipeline flow profile, pipeline direction change or confluence of liquid from more pipelines.

The size of hydraulic losses, caused by friction and local losses, is typically expressed as a part of the velocity height of the liquid flow in the pipeline. The friction losses are directly proportional to the friction loss coefficient $\lambda$ and to the pipeline length L, and inversely proportional to the inner pipeline profile D. The local losses are directly proportional to the local loss coefficient $\zeta$.

$$Z_t + Z_m = \left(\lambda \frac{L}{D} + \zeta\right)\frac{v^2}{2g}$$

The pumping system for liquid transport consists of a suction pipeline, a pump and a delivery duct. When more pumps are used in one pumping system, the pumps may be connected in series or in parallel. With a parallel arrangement of pumps, a separate suction pipeline for each pump is recommended. The delivery ducts of respective pumps are then connected into one delivery duct; otherwise they would be separate pumping systems.

When designing a pumping system, the pipelines, i.e. suction and delivery, must be designed with respect to investment and mainly operational costs of the whole system, and then the pumping units can be designed. For this reason, it is desirable to reduce hydraulic losses of the flowing liquid as much as possible. To reduce the hydraulic friction losses, the inner pipeline profile is designed with respect to the recommended flow speed, e.g. according to ČSN 75 5301, and furthermore, the pipeline material is designed with low roughness of the inner surface. To reduce the local hydraulic losses, it is necessary to reduce the velocity field of the flowing liquid as much as possible, i.e. to design a pipeline without unnecessary directional bends, sudden changes in the inner profile or stream collisions during confluence of liquid from multiple pipelines. In all cases of changes of the flowing liquid velocity field, it is desirable to have these changes as gradual as possible. In common practice, insufficient attention is usually paid to minimization of local hydraulic losses arising at flowing of liquids in the pumping system pipelines. This is mainly due to the space available for pipeline positioning, i.e. a large number of sharp pipeline bends, and furthermore due to the use of fittings which are available on the market.

The pressure piping systems contain pipelines and pipe fittings, e.g. to change the pipeline direction, to reduce the inner pipeline profile or the pipeline branch, a so-called T-piece. The material for piping systems is mainly ductile iron, PE, PVC, PP and steel. In all material versions, the system pipe fittings are practically identical; they differ only in their different method of connection to the pipeline.

In the field of water management facilities in the European Union, with parallel connection of two pumps in connection of two delivery ducts into one downstream pipeline, a standardly produced T-piece of the given inner profile and possibly a reduction depending on the pipeline profile are commonly used. Depending on the inner profile of the used pipeline, the manufacturers standardly produce T-pieces with a connection at the angle of 90°, and with profiles to DN 100 mm also at the angle of 45° in the shape of the asymmetric Y.

The use of the T-piece with connection at the angle of 90° enables two possible connection methods, when both methods are applied. In one case, the respective delivery ducts are connected against each other, and this causes the collision of liquid streams from respective delivery ducts. In the other case, one delivery duct is connected in the direct direction and the other is connected to it at angle of 90°. At frontal collision of streams, two liquids flow together, when respective streams have velocity vectors in one axis, but of opposite direction. As a result, incoming streams are intensively mixed, and at the same time, both incoming streams must change their direction by 90°. For this reason, two delivery ducts are connected into one downstream pipeline, and this connection causes the greatest energy dissipation, i.e. the highest local hydraulic loss occurs. This corresponds to the highest local loss coefficient which in average reaches values of about $\zeta_1 = 2{,}9$. When connecting the T-piece with connection at the angle of 90° in the version with lateral stream collision, a liquid confluence appears when one stream is guided in the direct direction and the other is linked to it at the angle of 90°. In this case, the velocity vectors of respective streams are perpendicular to each other, and one of these streams must change its direction by 90°. The intensity of intermixing of incoming streams depends on the size of respective streams. In this connection, smaller local hydraulic losses appear than in the previous case which is in accordance with the local loss coefficient which in average reaches the values of about $\zeta_1 = 2.6$.

When using the asymmetric Y-fitting with connection at the angle of 45°, a liquid confluence appears when one steam is guided in the direct direction and the other is linked to it at the angle of 45°. In this case, the velocity vectors of respective streams form the angle of 45°, when one of these streams must change its direction by 45°. The intensity of intermixing of incoming streams depends on the size of respective streams, but due to inclined linking, it is lower than in both previous cases with the T-piece connection. This is in accordance with lower local hydraulic losses than in previous cases. The local loss coefficient in average reaches the values of about $\zeta_1 = 2{,}0$. Document DE1425473A1 discloses such kind of Y-fitting.

The disadvantage of these available methods of connection of two delivery ducts into one downstream pipeline is represented by local hydraulic losses which arise due to the turbulence at connection of streams of the flowing liquid. This increases the operational costs for energy consumed by pumps during the transport of the liquid.

The advantage of the parallel connection of the delivery duct of pumps seems to be the design of such an angle of the connection fitting and direction of the water stream so that the hydraulic losses of the flowing water in the connection pipeline were as low as possible.

The closest described state of the art of the proposed fitting is the fitting of the nonpressure piping connection.

Summary of Invention

The presented invention is an economical fitting according to claim 1 and relates to optimization of hydraulic losses arising at confluence of two water streams in the connection of two pressure pipelines and thus at the increase of the piping system efficiency. Advantageous embodiments of the invention form the subject matter of the dependent claims.

The deficiencies of fittings commonly used in connection of two delivery ducts of parallelly connected pumps known in the art are optimized by the economical fitting of the invention. With this fitting, there is a symmetric connection of two water streams coming to the connection point at the mutual angle of $\alpha = 84$ to 96°, and the water outflow at the angle of $\beta = 138$ to 132°. The outlet pipe in the connection point of the inlet pipes has an elliptic shape, and a circular shape on the other end with the outlet diameter D2, wherein inside the outlet pipe, a deflector is located at the connection of the inlet pipes, and the ratio of the outlet diameter D2 of the outlet pipe to the diameter D1 of the inlet pipe is 1.3 to 1.7.

The deflector has a preferred length equal to 0.6 to 0.9 times the diameter D1 of the inlet pipe.

The horizontal angle of the transition profile of the outlet pipe may be $\gamma = 2$ to 6°, and the vertical angle may be $\delta = 3$ to 7°.

The local loss coefficient $\zeta_1$ for different flow ratios of the inlet pipe $Q_1$ to the outlet pipe $Q_2$ is 1 to 1.4.

A layer decreasing the hydraulic roughness is preferably located on the inner surface of the fitting.

The behaviour of the flowing water in the connected fitting is according to the invention embodiment as follows. Due to the effect of the economical fitting on the flowing water, a centrifugal force of respective incoming water streams arises in the direction from the outer sides to the inner side of the connecting fitting when the incoming water changes its flowing direction by approx. 45° in the connection point of the two inlet pipes. The result of which is a pressure gradient which acts from the inner sides of the pipes towards the outer side of the outlet pipe of the economical fitting. Consequently, after the flow direction change, a rapid equalizing of the water velocity field occurs in the total flow profile of respective water streams. Both incoming streams are connected by the effect of the deflector behind the connection of the inlet pipes, in a parallel direction, when mixing of both streams is reduced. To decrease the flowing speed and to increase the water outlet flow pressure behind the point of connection of both streams, the outlet pipe of the economical fitting has a larger inner profile than the inlet pipe of the fitting. In comparison with common methods used for connecting of two streams, the energy dissipation of the flowing water is reduced partly by the effect of the reduction in intermixing of the incoming water streams and partly by reduction of kinetic energy conversions to pressure energy, and consequently of the pressure energy to the kinetic energy. The local loss coefficient of the economical fitting according to the invention in average reaches the values of about $\zeta_1 = 1.2$. The experimental results of the local loss coefficient of the economical fitting in comparison with common fittings are shown in the attached figure. The figure shows the dependence of the local loss coefficient $\zeta_1$ on the ratio of the inlet flow into the fitting from one delivery duct of the pump and the outlet flow of the fitting behind the connection of both delivery ducts into one collective $Q_1/Q_2$. With respect to

the above mentioned findings, the turbulence arising at water stream confluence will be reduced due to the effect of the economical fitting on the flowing water. As a consequence, less dissolved gases from the transported water will be released and thus, the oxidation of inner surfaces in pipes, fittings and fixtures will be reduced. Furthermore, due to the decrease of energy hydraulic losses, the efficiency of the whole piping system will be increased. In total, the economical fitting according to the invention has a positive effect on the decrease of the operational costs and the increase of the service life.

Brief Description of Drawings

The invention will be more clear with the aid of the drawings depicting:

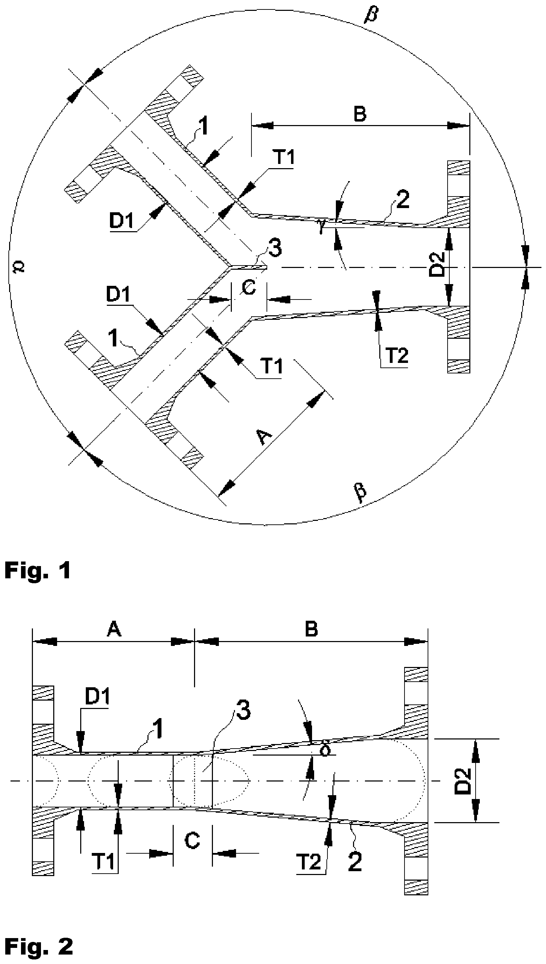

Fig. 1 - the horizontal section of the economical fitting according to the invention.

Fig. 2 - the vertical section of the economical fitting according to the invention.

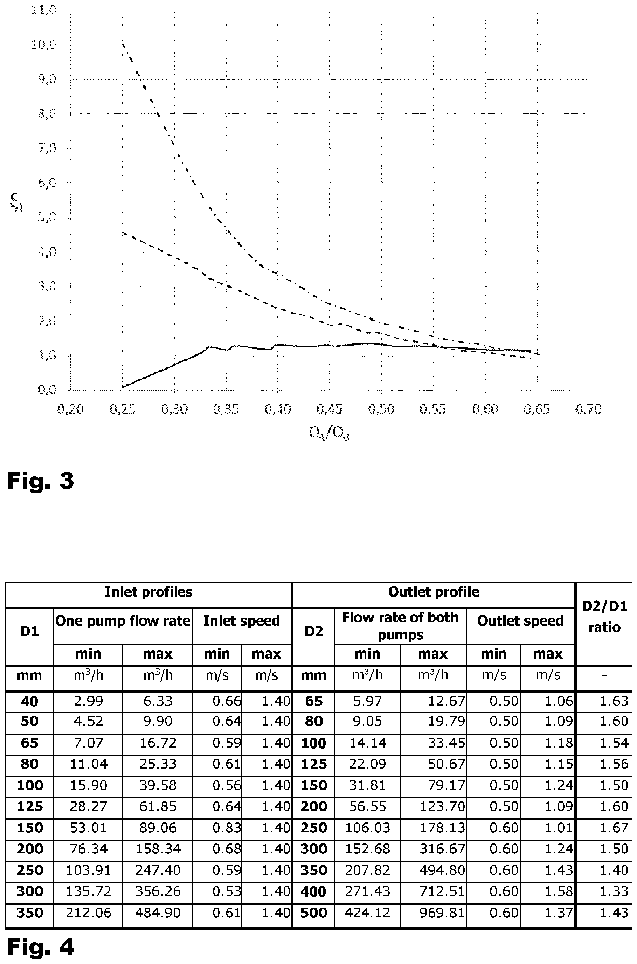

Fig. 3 - the graph of local hydraulic loss coefficients of connection fittings for various ratios of the inlet and outlet flow. The continuous line depicts the local loss coefficients of the economical fitting according to the invention; the dashed line depicts the local loss coefficients of the asymmetric Y-fitting with connection angle of 45°; and the dot-and-dash line depicts the local loss coefficients of the T-piece of 90° with opposite connection of the delivery ducts.

Fig. 4 - table of inlet profiles D1 and outlet profiles D2 of respective economical fittings depending on the recommended pump flow rate ranges.

Examples of Invention Embodiments

The economical fitting connecting two pressure pipelines into one outlet pipeline with connection of parallel pumps in water management operations comprises two inlet pipes $\underline{1}$ of the circular profile with diameter $\underline{D1}$, whose axis are at angle $\underline{\alpha}$ to each other, and further they are connected at angle $\underline{\beta}$ to one outlet pipe $\underline{2}$, which has an elliptic shape in the connection point of the inlet pipes $\underline{1}$, and a circular shape on the other side with the outlet diameter $\underline{D2}$. Inside the outlet pipe $\underline{2}$, a deflector $\underline{3}$ is located at the connection of the inlet pipes $\underline{1}$. The deflector $\underline{3}$ has a preferred length equal to 0.6 to 0.9 times the diameter $\underline{D1}$ of the inlet pipe $\underline{1}$. The local loss coefficient $\zeta_1$ for different flow ratios of the inlet pipe $\underline{1}$ Q1 to the outlet pipe $\underline{2}$ Q2 is 1 to 1.4. The economical fitting is provided with a layer decreasing the hydraulic roughness on its inner surface.

The first example of the economical fitting embodiment is a fitting for connection of two pipes with a DN40 profile into one downstream DN65 pipeline. Both inlet pipes 1 are made of stainless steel with the inner profile of $\underline{D1}$ = 40 mm with the wall thickness of $\underline{T1}$= 2.5 mm. The length of respective inlet tubes $\underline{1}$ is $\underline{A}$ = 125 mm and they both form the angle of $\underline{\alpha}$ = 90°. The outlet pipe $\underline{2}$ is made of stainless steel with the inner profile of $\underline{D2}$ = 65 mm with the wall thickness of $\underline{T2}$= 3.0 mm and the length $\underline{B}$ = 180 mm. To connect the inlet pipes $\underline{1}$ to the outlet pipe $\underline{2}$, the outlet pipe $\underline{2}$ is in the point of connection flattened to an elliptic shape, and it evenly turns into a circular shape to the outlet profile. The horizontal angle of this transition is $\underline{\gamma}$ = 4°, and the vertical $\underline{\delta}$ = 5°. To reduce the turbulence of the flowing water and to decrease the local hydraulic losses, the fitting is equipped with a flow deflector $\underline{3}$ with length $\underline{C}$ = 30 mm in the connection point of the inlet pipes. The fitting is designed to the internal nominal water pressure of PN16, i.e. 16 Bar. The connection of the fitting to respective pipes is enabled by flanges.

The second example of the economical fitting embodiment is a fitting for connection of two pipes with a DN80 profile into one downstream DN125 pipeline. Both inlet pipes $\underline{1}$ are made of stainless steel with the inner profile of $\underline{D1}$ = 80 mm with the wall thickness of $\underline{T1}$= 3.5 mm. The length of respective inlet tubes $\underline{1}$ is $\underline{A}$ = 205 mm and they both form the angle of $\underline{\alpha}$ = 90°. The outlet pipe $\underline{2}$ is made of stainless steel with the inner profile of $\underline{D2}$ = 125 mm with the wall thickness of $\underline{T2}$= 4.0 mm and the length $\underline{B}$ = 294 mm. To connect the inlet pipes $\underline{1}$ to the outlet pipe $\underline{2}$, the outlet pipe $\underline{2}$ is in the point of connection flattened to an elliptic shape, and it evenly turns into a circular shape to the outlet profile. The horizontal angle of this transition is $\underline{\gamma}$ = 4°, and the vertical $\underline{\delta}$ = 5°. To reduce the turbulence of the flowing water and to decrease the local hydraulic losses, the fitting is equipped with a flow deflector $\underline{3}$ with length $\underline{C}$ = 58 mm in the connection point of the inlet pipes 1. The fitting is designed to the internal nominal water pressure of PN16, i.e. 16 Bar. The connection of the fitting to respective pipes is enabled by flanges.

The above mentioned examples may be also made from plastic with an appropriate adjustment of the pipe wall thickness. The connection method of the economical fitting may be adjusted according to the material of the piping system and its connection method - flange connection, glued connection, welded connection, etc. The range of inner profiles of the economical fitting is considered from DN40 to DN500.

Industrial Applicability

The fitting according to this invention finds employment mainly in line water management structures. In particular, the pressure systems with parallelly connected pumps in water supply, industrial and balneotechnical facilities are involved where with respect to their long-term operation of parallelly connected pumps, optimization of hydraulic parameters of their systems is desirable, and thus the decrease of their operational costs and the increase of lifetime of the whole water transport system.

## Claims

1. An economical fitting connecting two pressure pipes into one outlet pipe, especially when connecting parallel pumps in water management operations *characterized in that* the fitting comprises two inlet pipes (1) of a circular profile with a diameter (D1), whose axes are at the angle of $\alpha$ = 84 to 96° to each other, and further are connected at the angle of $\beta$ = 132 to 138° to one outlet pipe (2), which has an elliptic shape in the connection point of the inlet pipes (1) and a circular shape with the outlet diameter (D2) on the other end, wherein a deflector (3) is located in the outlet pipe (2) at the connection of inlet pipes, and the ratio of the outlet diameter (D2) of the outlet pipe (2) to the diameter (D1) of inlet pipes (1) is 1.3 to 1.7.

2. The economical fitting according to claim 1 *characterized in that* the deflector (3) has a length equal to 0.6 to 0.9 times the diameter (D1) of the inlet pipe (1).

3. The economical fitting according to claims 1 or 2 *characterized in that* the horizontal angle of the transition profile of the outlet pipe (2) is $\gamma$ = 2 to 6°, and the vertical angle is $\delta$ = 3 to 7°.

4. The economical fitting according to any of claims 1 to 3 *characterized in that* the local loss coefficient $\zeta_1$ for various flow ratios of the inlet pipe (1) $Q_1$ to the outlet pipe (2) $Q_2$ is 1 to 1.4.

5. The economical fitting according to any of claims 1 to 4 *characterized in that* it is provided with a layer decreasing the hydraulic roughness on its inner surface.

## Patentansprüche

1. Sparendes Formstück zum Verbinden von zwei Druckleitungen zu einer Ausgangsleitung, insbesondere beim Anschluss von Parallelpumpen in Wasserwirtschaftsbetrieben, *gekennzeichnet dadurch, dass* das Formstück zwei Einlassrohre (1) mit Kreisprofil mit einem Durchmesser (D1) umfasst, deren Achsen in einem Winkel von $\alpha$ = 84 bis 96° zueinander stehen und weiterhin sind sie in einem Winkel von $\beta$ = 132 bis 138° mit einem Auslassrohr (2) verbunden, das an der Verbindungsstelle der Einlassrohre (1) eine elliptische Form hat und am anderen Ende eine kreisförmige Form mit einem Auslassdurchmesser (D2) hat, wobei innerhalb des Auslassrohrs (2) an der Verbindungsstelle der Einlassrohre (1) ein Gleichrichter (3) angeordnet ist und das Verhältnis des Auslassdurchmessers (D2) des Auslassrohrs (2) zum Durchmesser (D1) der Einlassrohre (1) 1,3 bis 1,7 beträgt.

2. Sparendes Formstück nach Anspruch 1, *gekennzeichnet dadurch, dass* der Gleichrichter (3) eine Länge hat, die gleich dem 0,6 bis 0,9-fachen Durchmesser (D1) des Einlassrohrs (1) ist.

3. Sparendes Formstück nach Anspruch 1 oder 2, *gekennzeichnet dadurch, dass* der Horizontalwinkel des Übergangsprofils des Auslassrohrs (2) $\gamma$ = 2 bis 6° und der Vertikalwinkel $\delta$ = 3 bis 7° beträgt.

4. Sparendes Formstück nach einem der Ansprüche 1 bis 3, *gekennzeichnet dadurch, dass* der lokale Verlustbeiwert $\zeta_1$ für unterschiedliche Strömungsverhältnisse des Einlassrohrs (1) $Q_1$ zum Auslassrohr (2) $Q_2$ 1 bis 1,4 beträgt.

5. Sparendes Formstück nach einem der Ansprüche 1 bis 4, *gekennzeichnet dadurch, dass* es an der Innenfläche mit einer die hydraulische Rauigkeit reduzierenden Schicht versehen ist.

## Revendications

1. Raccord économique pour raccorder deux tuyaux de pression dans un seul tuyau de sortie, notamment lors du raccordement de pompes parallèles dans des stations de gestion des eaux *caractérisé en ce que* le raccord comprend deux tuyaux (1) d'entrée de profile circulaire de diamètre (D1), dont les axes forment, l'un par rapport à l'autre, un angle $\alpha$ = 84 à 96°, et de plus, ils sont raccordés dans un tuyau (2) de sortie sous l'angle $\beta$ = 132 à 138°, ce dernier étant, au niveau de raccordement des tuyaux (1) d'entrée, de forme elliptique et sa seconde extrémité étant de forme circulaire avec un diamètre de sortie (D2), un redresseur (3) étant disposé sur le raccordement des tuyaux (1) d'entrée à l'intérieur du tuyau (2) de sortie et le rapport du diamètre de sortie (D2) du tuyau (2) de sortie au diamètre (D1) des tuyaux (1) d'entrée est de 1,3 à 1,7.

2. Raccord économique selon la revendication 1 *caractérisé en ce que* le redresseur (3) a une longueur égale à 0,6 à 0,9 fois le diamètre (D1) du tuyau (1) d'entrée.

3. Raccord économique selon la revendication 1 ou 2 *caractérisé en ce que* l'angle horizontal du profil de passage du tuyau (2) de sortie est $\gamma$ = 2 à 6° et l'angle vertical $\delta$ = 3 à 7°.

**4.** Raccord économique selon les revendications 1 à 3 *caractérisé en ce que* le coefficient de perte locale $\zeta_1$ pour différents rapports de débits du tuyau (1) d'entrée $Q_1$ au tuyau (2) de sortie est de 1 à 1,4.

**5.** Raccord économique selon les revendications 1 à 4 *caractérisé en ce que* sur sa surface intérieure, il est pourvu d'une couche réduisant la rugosité hydraulique.

**Fig. 1**

**Fig. 2**

**Fig. 3**

| | Inlet profiles | | | | | Outlet profile | | | | D2/D1 ratio |
|---|---|---|---|---|---|---|---|---|---|---|
| D1 | One pump flow rate | | Inlet speed | | D2 | Flow rate of both pumps | | Outlet speed | | |
| | min | max | min | max | | min | max | min | max | |
| mm | $m^3/h$ | $m^3/h$ | m/s | m/s | mm | $m^3/h$ | $m^3/h$ | m/s | m/s | - |
| 40 | 2.99 | 6.33 | 0.66 | 1.40 | 65 | 5.97 | 12.67 | 0.50 | 1.06 | 1.63 |
| 50 | 4.52 | 9.90 | 0.64 | 1.40 | 80 | 9.05 | 19.79 | 0.50 | 1.09 | 1.60 |
| 65 | 7.07 | 16.72 | 0.59 | 1.40 | 100 | 14.14 | 33.45 | 0.50 | 1.18 | 1.54 |
| 80 | 11.04 | 25.33 | 0.61 | 1.40 | 125 | 22.09 | 50.67 | 0.50 | 1.15 | 1.56 |
| 100 | 15.90 | 39.58 | 0.56 | 1.40 | 150 | 31.81 | 79.17 | 0.50 | 1.24 | 1.50 |
| 125 | 28.27 | 61.85 | 0.64 | 1.40 | 200 | 56.55 | 123.70 | 0.50 | 1.09 | 1.60 |
| 150 | 53.01 | 89.06 | 0.83 | 1.40 | 250 | 106.03 | 178.13 | 0.60 | 1.01 | 1.67 |
| 200 | 76.34 | 158.34 | 0.68 | 1.40 | 300 | 152.68 | 316.67 | 0.60 | 1.24 | 1.50 |
| 250 | 103.91 | 247.40 | 0.59 | 1.40 | 350 | 207.82 | 494.80 | 0.60 | 1.43 | 1.40 |
| 300 | 135.72 | 356.26 | 0.53 | 1.40 | 400 | 271.43 | 712.51 | 0.60 | 1.58 | 1.33 |
| 350 | 212.06 | 484.90 | 0.61 | 1.40 | 500 | 424.12 | 969.81 | 0.60 | 1.37 | 1.43 |

**Fig. 4**

**EP 3 910 226 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 1425473 A1